(19) Europäisches Patentamt
European Patent Office
Office européen des brevets

(11) Publication number: **0 532 804 B1**

(12) **EUROPEAN PATENT SPECIFICATION**

(45) Date of publication of patent specification: **28.06.95**

(51) Int. Cl.$^6$: **C08F 8/00**

(21) Application number: **91308486.9**

(22) Date of filing: **17.09.91**

(54) **An ethylene polymer and a process for its production.**

(43) Date of publication of application:
**24.03.93 Bulletin 93/12**

(45) Publication of the grant of the patent:
**28.06.95 Bulletin 95/26**

(84) Designated Contracting States:
**DE FR GB IT NL**

(56) References cited:
**EP-A- 0 230 382**
**EP-A- 0 295 789**
**EP-A- 0 313 387**
**EP-A- 0 529 910**
**DE-B- 1 062 936**
**FR-A- 2 311 057**
**GB-A- 2 140 811**
**US-A- 3 310 518**
**US-A- 4 761 456**

(73) Proprietor: **Tonen Corporation**
**1-1,Hitotsubashi, 1-Chome**
**Chiyoda-Ku**
**Tokyo (JP)**

(72) Inventor: **Mikawa, Naohiro, c/o Corporate Res. & Dev. Lab.**
**Tonen Corporation,**
**3-1, Nishitsurugaoka 1-chome**
**Ooi-machi,**
**Iruma-gun,**
**Saitama (JP)**
Inventor: **Ueki, Satoshi, c/o Corporate Res. & Dev. Lab.**
**Tonen Corporation,**
**3-1, Nishitsurugaoka 1-chome**
**Ooi-machi,**
**Iruma-gun,**
**Saitama (JP)**
Inventor: **Koyama, Naomi, c/o Corporate Res. & Dev. Lab.**
**Tonen Corporation,**
**3-1, Nishitsurugaoka 1-chome**
**Ooi-machi,**
**Iruma-gun,**
**Saitama (JP)**
Inventor: **Morioka, Tetsuya, c/o Corporate Res. & Dev. Lab.**
**Tonen Corporation,**
**3-1, Nishitsurugaoka 1-chome**
**Ooi-machi,**
**Iruma-gun,**
**Saitama (JP)**
Inventor: **Toki, Shigeyuki, c/o Corporate Res. & Dev. Lab.**
**Tonen Corporation,**
**3-1, Nishitsurugaoka 1-chome**
**Ooi-machi,**
**Iruma-gun,**
**Saitama (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 532 804 B1

Inventor: **Furuhashi,Hiroyuki**
**c/o Corp. Res.& Dev. Lab. Tonen Corp.Iruma gun**
**3-1 Nishitsurugaoka 1Chome,Ooima Saitama (JP)**

(74) Representative: **Baverstock, Michael George Douglas et al**
**BOULT, WADE & TENNANT**
**27 Furnival Street**
**London, EC4A 1PO (GB)**

## Description

This invention relates to a biodegradable ethylene polymer having ester bonds in the main chain and a process for its production.

Polyethylene can be degraded by microorganisms if its molecular weight is low. It is known that an ester bond in a molecule is hydrolyzed by microorganisms.

In order to render biodegradable a polyethylene of high molecular weight it is known to mix the polyethylene with, for example, starch. In this method, however, starch is degraded, but the polyethylene itself is not degraded.

EP-A-0 529 910 published on 03.03.93 describes a biodegradable hydrophilic crosslinked polymer comprising ester bonds between main chains which have an oligomeric structure and have been formed by polymerization of monoethylenically unsaturated carboxylic acid.

It is an object of the present invention to provide a biodegradable ethylene polymer.

It is another object of the present invention to provide a polyethylene which is capable of being degraded by microorganisms.

These objects can be attained by an ethylene polymer comprising a recurring unit represented by the general formula

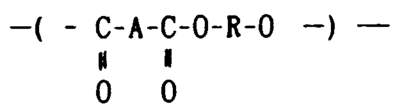 or

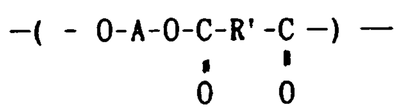

in which R is a divalent hydrocarbon group containing 2 to 20 carbon atoms, R' is a divalent hydrocarbon group containing 1 to 20 carbon atoms and A is a polyethylene segment comprising a recurring unit represented by the formula $-( - CH_2 \cdot CH_2 -) -$ and having a number average molecular weight ($\overline{M}n$) of 300 to 300,000, and the ethylene polymer having a number average molecular weight ($\overline{M}n$) of 500 to 5,000,000.

The inventors made various studies from the standpoint that the objects of the present invention could be attained by provision of a polymer comprising ester bonds in the skeleton and a polyethylene segment of relatively low molecular weight, and found that the polymer of the present invention can be obtained by polycondensation of an ethylene polymer having carboxyl groups, hydroxyl groups or derivatives thereof at both the ends with a diol compound, dicarboxylic acid or derivatives thereof respectively.

The present invention provides an ethylene polymer comprising a recurring unit represented by the general formula

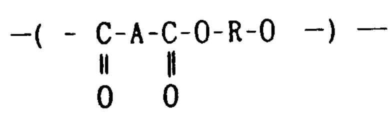 or

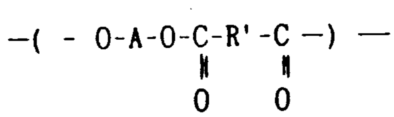

in which R is a divalent hydrocarbon group containing 2 to 20 carbon atoms, R' is a divalent hydrocarbon group containing 1 to 20 carbon atoms and A is a polyethylene segment comprising a recurring unit represented by the formula $-( - CH_2 \cdot CH_2 -) -$ and having a number average molecular weight ($\overline{M}n$) of 300 to 300,000, and the ethylene polymer having a number average molecular weight ($\overline{M}n$) of 500 to 5,000,000, and a process for the production of the above described ethylene polymer comprising polycondensation of

an ethylene polymer (I) or (I') respectively comprising a recurring unit represented by -( - $CH_2$ • $CH_2$ -) - and having

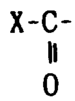

group or X'O- group at both the ends and an Mn of 300 to 300,000 respectively with a compound (II) or (II') respectively presented by the general formula YO-R-OY or

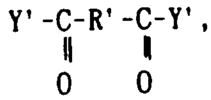

in which X is -OH, -$OR^1$, a halogen atom or -$SO_3R^2$, X' is a hydrogen atom, -$SIR^{1'}_3$ or

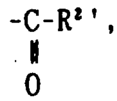

Y is a hydrogen atom, -$SiR^3_3$ or

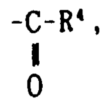

Y' is -OH, -$OR^{3'}$, a halogen atom or -$SO_3R^{4'}$, $R^1$ is a hydrocarbon group containing 1 to 5 carbon atoms, $R^2$ is a hydrocarbon group containing 1 to 20 carbon atoms, $R^3$ and $R^4$ are hydrocarbon groups each containing 1 to 5 carbon atoms, $R^{1'}$, $R^{2'}$ and $R^{3'}$ are hydrocarbon groups each containing 1 to 5 carbon atoms, $R^{4'}$ is a hydrocarbon group containing 1 to 20 carbon atoms and R or R' has the same meaning as described above.

Ethylene Polymer

The ethylene polymer of the present invention is represented by the above described recurring unit. In the above described recurring unit, R represents a divalent hydrocarbon group of 2 to 20 carbon atoms, preferably a divalent saturated or unsaturated aliphatic hydrocarbon of 2 to 12 carbon aroms and R' represents a divalent hydrocarbon group of 1 to 20 carbon atoms, preferably a saturated or unsaturated aliphatic or alicyclic hydrocarbon group of 1 to 12 carbon atoms.

"A" in the recurring unit consists of a polyethylene segment having a number average molecular weight ($\overline{Mn}$) of 300 to 300,000, preferably at most 100,000, in particular, at most 10,000 from the standpoint of the biodegradable property. The ethylene polymer of the present invention has an Mn of 500 to 5,000,000, preferably 1,000 to 500,000.

The ethylene polymer of the present invention can be produced by polycondensation of the foregoing ethylene polymer (I) with the compound (II), or of the ethylene polymer (I') with the compound (II').

The ethylene polymer (I) or (I') respectively comprises a recurring unit of -( - $CH_2$ • $CH_2$ -) - and respectively having

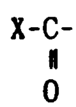

group or X'O- at both the ends and an Mn of 300 to 300,000, preferably at most 100,000, particularly at most 10,000 from the standpoint of the biodegradable property.

In the above described group, X is -OH, $-OR^1$, a halogen atom or $-SO_3R^2$ and X' is a hydrogen atom, $-SiR^{1'}_3$ or

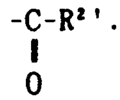

$R^1$ in $OR^1$ is a hydrocarbon group containing 1 to 5 carbon atoms, preferably an alkyl group, more preferably methyl or ethyl group. The halogen atoms Include chlorine, bromine, fluorine and iodine. $R^2$ in $-SO_3R^2$ is a hydrocarbon group containing 1 to 20 carbon atoms, specifically an alkyl group, alkenyl group, cycloalkyl group, aryl group or aralkyl group containing 1 to 20 carbon atoms. Above all, aryl groups and aralkyl groups are preferable. $R^2$ can be combined with a halogen atom such as chlorine, bromine, iodine or fluorine.

Examples of $-SO_3R$ are as follows:

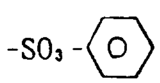 , 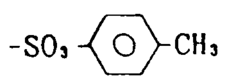 , 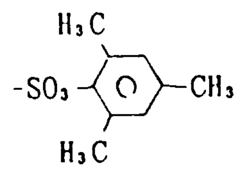 ,

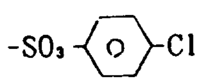 , 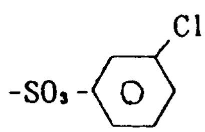 , 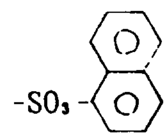

X is preferably -OH, $-OCH_3$, $-OC_2H_5$, -Cl or

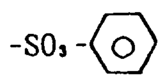 ,

more preferably -OH or $-OCH_3$.

$R^{1'}$ and $R^{2'}$ in X' are hydrocarbon groups containing 1 to 5 carbon atoms, preferably alkyl groups, more preferably methyl and ethyl groups.

Production of Ethylene Polymer (I)

An ethylene polymer (I) such that X is -OH or $-SO_3R^2$ can be produced by the following method.

Ethylene is polymerized in the presence of a dilithio compound formed by reaction of a diolefin compound (III) represented by the general formula $H_2C=CR^3$-$R^4$-$CR^3=CH_2$ wherein $R^3$ is a hydrocarbon group containing 1 to 10 carbon atoms and $R^4$ is a divalent hydrocarbon group containing 1 to 20 carbon atoms, with an organolithium compound (IV), and a diamine compound (V), then reacted with carbon dioxide and further reacted with a proton donor or sulfonyl halide represented by the general formula $ZSO_2R^2$ wherein Z is a halogen atom and $R^2$ has the same meaning as described above.

Another ethylene polymer (I) such that X is $-OR^1$ or a halogen atom can be produced by the following method.

Ethylene is polymerized in the presence of a dilithio compound formed by reaction of the above described diolefin compound (III) with the organolithium compound (IV), and a diamine compound (V), then reacted with carbon dioxide, further reacted with a proton donor and thereafter reacted with an alcohol represented by the general formula $R^1OH$ wherein $R^1$ has the same meaning as described above or thionyl

halide.

(1) Reaction of Diolefin Compound (III) with Organolithium Compound (IV)

The diolefin compound (III) is represented by the general formula, $H_2C=CR^3-R^4-CR^3=CH_2$. In this formula, $R^3$ is a hydrocarbon group containing 1 to 10 carbon atoms, illustrative of which are alkyl, cycloalkyl, aryl and aralkyl groups, preferably alkyl and aryl groups. Examples thereof are alkyl groups such as methyl, ethyl, propyl, butyl, hexyl groups, etc. and aryl groups such as phenyl, tolyl, xylyl groups.

$R^4$ is a divalent hydrocarbon group containing 1 to 20 carbon atoms, for example, substituents such as $-(-CH_3-)_m-$ wherein m = 1 to 12 and

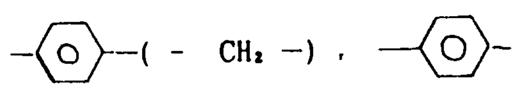

wherein r = 1 to 6.

Examples of the compound (III) are 2,5-dimethyl-1,5-hexadiene, 2,5-diphenyl-1,5-hexadiene, 2,6-diphenyl-1,6-heptadiene, 2,7-diphenyl-1,7-octadiene, 2,7-di(4-toluyl)-1,7-octadiene, 2,7-dimethyl-1,7-octadiene, 1,2-bis[4-(1-phenylvinyl)phenyl]ethane, 1,4-bis[4-(1-phenylvinyl)phenyl]butane, 1,2-bis(isopropenyl-4-phenyl)ethane, 1,2-bis(isopropenyl-4-phenyl)butane and the like.

The organolithium compound (IV) is a compound represented by the general formula $R^5Li$, In which $R^5$ is a hydrocarbon group containing 1 to 10 carbon atoms, preferably alkyl groups and aryl groups, more preferably alkyl groups.

As the compound (IV), for example, may be used methyllithiium, ethyllithium, n-propyllithium, i-propyllithium, n-butyllithium, i-butyllithium, s-butyllithium, t-butyllithium, n-pentyllithium and hexyllithium.

The reaction of the compound (III) and the compound (IV) is preferably carried out in the presence of an organic solvent. As the organic solvent, there are preferably used hydrocarbons, in particular, aliphatic hydrocarbons such as heptane and hexane and aromatic hydrocarbons such as benzene and toluene. Two or more organic solvents can be used.

The compound (III) and the compound (IV) are used in a (IV)/(III) molar ratio of 0.1 to 30, preferably 1 to 5. Both the compounds are reacted at -50 °C to +100 °C, preferably 0 to 50 °C for 1 hour to 1 month, preferably 1 day to 10 days.

(2) Polymerization of Ethylene

The polymerization of ethylene is carried out in the presence of a dilithio compound formed by the reaction of the compounds (III) and (IV) as described in the above described (1) and a diamine compound (V).

The diamine compound (V) is represented by the general formula, $R^6_2N-R^7-NR^6_2$ wherein $R^6$ is a hydrocarbon group of 1 to 5 carbon atoms, preferably alkyl group, illustrative of which are methyl, ethyl, n-propyl, i-propyl, n-butyl, i-butyl, s-butyl, t-butyl and n-pentyl, the ethyl group being particularly preferable, and $R^7$ is a divalent hydrocarbon group of 1 to 10 carbon atoms, preferably a divalent hydrocarbon group represented by the general formula $-C_tH_{2t}-$ wherein t = 1 to 10.

Examples of the compound (V) are tetramethylethylenediamine, tetramethylpropylenediamine, tetramethyldiaminobutane, tetramethyldiaminopentane, tetramethyldiaminohexane, tetraethylethylenediamine and the like.

The polymerization of ethylene is preferably carried out in the presence of a solvent such as hydrocarbons, more preferably aromatic hydrocarbons such as benzene, toluene and xylene.

The ratio of the dilithio compound and diamine compound (V) used is 0.1 to 20 moles, preferably 0.5 to 4 moles of the diamine compound (V) to 1 mole of the diolefin compound (III).

The polymerization of ethylene is generally carried out at a temperature of -100 °C to +100 °C, preferably -30 °C to +30 °C for 1 hour to 1 month, preferably 10 hours to 1 week.

(3) Reaction with Carbon Dioxide

The reaction of the ethylene polymer formed in the above described (2) with carbon dioxide is generally carried out by feeding carbon dioxide to the reaction system of the above described (2) and bringing into

contact with the polymer. The carbon dioxide is present in a proportion of 0.1 to 10,000 moles, preferably 2 to 100 moles to 1 mole of the diolefin compound (1). The carbon dioxide can be fed in the form of a mixture containing carbon dioxide.

The reaction is generally carried out by feeding carbon dioxide at a relatively low temperature i.e. -150 °C to +50 °C, preferably -100 °C to 0 °C and then mixing at a temperature of -50 °C to +100 °C, preferably 0 to 50 °C for 0. 1 to 100 hours, preferably 1 to 10 hours, for example, by employing stirring means.

(4) Reaction with Proton Donor or Sulfonyl Halide

As the proton donor, there can be used water, alcohols, inorganic acids, etc. The alcohols include methanol, ethanol and propanol and the inorganic acids include hydrochloric acid, nitric acid and sulfuric acid.

The sulfonyl halide is represented by the general formula, $ZSO_2R^2$ in which Z is a halogen atom such as chlorine, bromine, fluorine or iodine. $R^2$ In this formula has the same meaning as $R^2$ in a case where the substituent X of the foregoing ethylene polymer is $-SO_3R^2$.

The reaction with the proton donor or sulfonyl halide is generally carried out at -100 °C to +200 °C, preferably 0 to 150 °C for 1 minute to 10 hours, preferably 0. 1 to 2 hours.

The ethylene polymer (I) of the present invention, in which

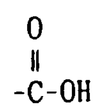

groups are introduced into both the ends thereof, is obtained by the reaction with the proton donor and that having

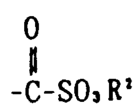

groups introduced into both the ends thereof is obtained by the reaction with the sulfonyl halide.

(5) Reaction with Alcohol or Thionyl Halide

The alcohol to be used is represented by the general formula, $R^1OH$ in which $R^1$ has the same meaning as described above. Thus, the particularly preferred alcohol is methanol or ethanol. As the thionyl halide, there can be used $SOCl_2$, $SO_2Cl_2$, $SOBr_2$, $SOI_2$, $SO_2Br_2$ and $SO_2I_2$.

The reaction with the alcohol or thionyl halide is generally carried out at -50 °C to +200 °C, preferably 50 to 150 °C for 1 minute to 1 week, preferably 1 hour to 1 day. The alcohol can either be used individually or in the form of an alcohol complex such as methanol • $BF_3$ complex.

The ethylene polymers (I) of the present invention, in which

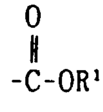

groups and

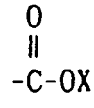

groups (X is a halogen atom) are respectively introduced into both the ends thereof, can be produced by reacting the product, obtained by reaction with the proton donor in the above described (4), respectively with the alcohol and with the thionyl halide.

It can be assumed that the polymer (I) of the present invention, obtained in this way, has the following microstructure containing the skeleton of the diolefin compound and the substituent $R^5$ of the organolithium compound used in the production, due to adoption of the above described production process:

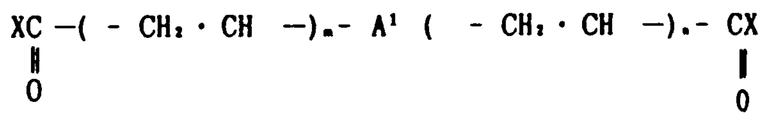

In the above described formula, $A^1$ is represented as follows, and (m + n) is an integer corresponding to the number average molecular weight:

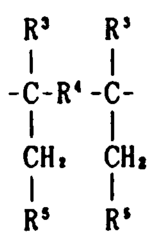 , 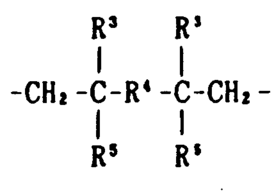 or 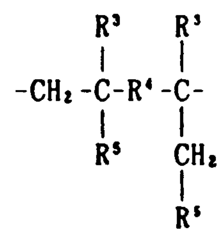

Production of Ethylene Polymer (I')

Ethylene polymer (I') such that X' is a hydrogen atom can be produced by the following method.

Ethylene is polymerized in the presence of a reaction product of a polymerization catalyst consisting of a vanadium chelate compound and dialkylaluminum dihalide with an ω, ω'-diolefin compound containing 5 to 20 carbon atoms, reacting with the said diolefin compound and then reacting with a proton donor to obtain an ethylene polymer (III) having vinyl groups at both ends thereof, which is then hydroxylated.

Ethylene polymer (I') such that X' is $-SiR^{1'}_3$ or

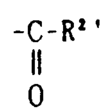

can be produced by reacting the above described hydroxylated ethylene polymer with a silane compound represented by the general formula $R^{1'}_3SiY'$ wherein $R^{1'}$ has the same meaning as described above and Y' is a halogen atom or a carboxylic acid represented by the general formula $R^{2'}COOH$ wherein $R^{2'}$ has the same meaning as described above.

(1) Reaction of Polymerization Catalyst with Diolefin Compound

The polymerization catalyst consists of a vanadium chelate compound and a dialkylaluminum halide. The vanadium chelate compound is represented by the following general formula:

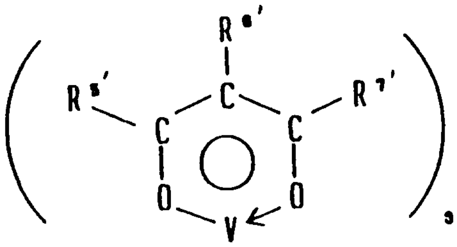

In this general formula, $R^{5'}$ to $R^{7'}$ represent hydrogen atoms or hydrocarbon groups of 1 to 8 carbon atoms, but at least one of $R^{5'}$ to $R^{7'}$ must be a hydrogen atom and all of $R^{5'}$ to $R^{7'}$ must not be hydrogen atoms.

Specific examples of the compound included in the above described general formula will now be illustrated.

When $R^{6'}$ is a hydrogen atom and $R^{5'}$ and $R^{7'}$ are hydrocarbon groups:

$R^{5'}/R^{7'}$ : $CH_3/CH_3$, $CH_3/C_2H_5$, $C_2H_5/C_2H_5$, $CH_3/C_6H_5$, $C_2H_5/C_6H_5$, $C_6H_5/C_6H_5$ $CH_3/C_6H_5CH_2$, $C_6H_5CH_2/C_6H_5CH_2$, $C_2H_5/C_6H_5CH_2$, $C_6H_5/C_6H_5CH_2$

When $R^{6'}$ is a hydrocarbon group and one of $R^{5'}$ and $R^{7'}$ is a hydrogen atom and the other is a hydrocarbon group:

$R^{6'}/R^{5'}$ or $R^{7'}$ : $CH_3/CH_3$, $C_2H_5/CH_3$, $CH_3/C_2H_5$, $C_2H_5/C_2H_5$, $C_6H_5/CH_3$, $CH_3/C_6H_5$, $C_6H_5/C_2H_5$. $C_2H_5/C_6H_5$, $C_6H_5/C_6H_5$, $C_6H_5CH_2/CH_3$, $CH_3/C_6H_5CH_2$, $C_6H_5CH_2/C_6H_5CH_2$, $C_6H_5CH_2/C_2H_5$. $C_2H_5/C_6H_5CH_2$, $C_6H_5CH_2/C_6H_5$ $C_6H_5/C_6H_5CH_2$

When $R^{6'}$ is a hydrogen atom and one of $R^{5'}$ and $R^{7'}$ is a hydrogen atom and the other is a hydrocarbon group:

$R^{5'}$ or $R^{7'}$ : $CH_3$, $C_2H_5$, $C_6H_5$, $C_6H_5CH_2$,

The following compounds are particularly preferred:

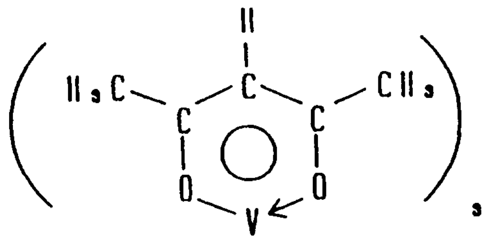

V(acetylacetonato)$_3$

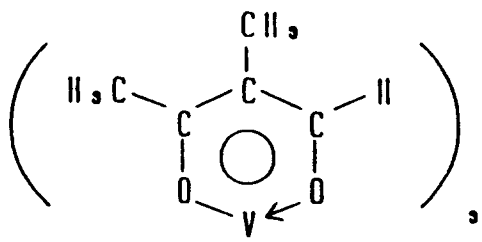

V(2-methyl-1,3-butanedionato)$_3$

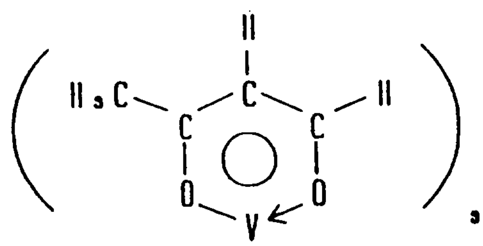

V(1,3-butanedionato)$_3$

The dialkylaluminum halide is represented by the foregoing general formula $R^{8}{}'_2AlX$ wherein $R^{8}{}'$ is an alkyl group of 1 to 20 carbon atoms and X is a halogen atom, examples of which are dimethylaluminum chloride, diethylaluminum chloride, diethylaluminum bromide, diethylaluminum iodide and diisobutylaluminum chloride.

The proportion of the vanadium chelate compound and dialkylaluminum halide used is generally 1 to 1,000 moles of the dialkylaluminum halide per 1 mole of the vanadium chelate compound.

The $\omega$, $\omega$'-diolefin compound is represented by the general formula $H_2C=CH$ -( - $C_mH_{2m}$ -) - $CH=CH_2$ where m is 1 to 15.

Examples of the diolefin compound are 1,4-pentadiene, 1,5-hexadiene. 1,6-heptadiene, 1,7-octadiene, 1,8-nonadiene, 1,9-decadiene, 1,10-undecadiene, 1,11-dodecadiene, 1,13-tetradecadiene, 1,15-hexadecadiene and 1,17-octadecadiene.

The reaction of the polymerization catalyst with the diolefin compound is preferably carried out in a solvent rich is inert to the reaction and liquid during the reaction, illustrative of which are hydrocarbons such as propane, butane, pentane, hexane, heptane and toluene.

The reaction is carried out at a temperature of -50 °C or lower, preferably -65 °C or lower for a period of time of 1 minute to 10 hours, preferably 5 minutes to 2 hours. The reaction proportion of the polymerization catalyst and diolefin compound is controlled in such a manner that the vanadium compound in the polymerization catalyst is present in a proportion of 0.1 to 10 moles, preferably 0.5 to 2.0 moles per 1 mole of the diolefin compound.

(2) Polymerization of Ethylene

The polymerization of ethylene is carried out in the presence of the reaction product obtained in the above described (1), preferably by feeding ethylene to the reaction system of the above described (1) and effecting the reaction at a temperature range similar to the above described (1) for a longer time than in the case of the above described (1). When the reaction temperature is adjusted to -65 °C or lower, in particular, there can be obtained a polymer having a $\overline{M}w$ (weight average molecular weight)/$\overline{M}n$ (number average molecular weight) of 1.05 to 1.5, near the monodisperse system. Furthermore, the yield and molecular weight of the polymer can be increased by lengthening the polymerization time.

(3) Reaction with Diolefin Compound

The reaction of the reaction product of the above described (2) with the diolefin compound is preferably carried out by feeding the diolefin compound to the reaction system of the above described (2) and effecting the reaction under similar reaction conditions to those of the above described (1).

(4) Reaction with Proton Donor

As the proton donor there can be used water, alcohols, inorganic acids, etc. The alcohols include methanol, ethanol and propanol and the inorganic acids include hydrochloric acid, nitric acid and sulfuric acid. The proton donor functions to release the polymerization catalyst and give proton through action on the ends of the polymer, thereby precipitating the polymer.

The reaction with the proton donor is generally carried out at a temperature of -100 °C to +200 °C , preferably 0 to 150 °C for 1 minute to 10 hours, preferably 0.1 to 2 hours. The proton donor is ordinarily used in a largely excessive amount.

Thus, the ethylene polymer (III') having vinyl groups at both ends of the present invention can be produced and it can be assumed that the polymer (III') has the following microstructure containing the skeleton of the diolefin compound and the alkyl group $R^{8'}$ of the dialkylaluminum halide, used in the production, due to adoption of the above described production process:

$A^{1'}$-( - $CH_2 \cdot CH_2$ -$)_n$— $B^{1'}$

in which $A^{1'}$ and $B^{1'}$ are described below and n is an integer corresponding to the number average molecular weight:

| | $A^{1'}$ | $B^{1'}$ |
|---|---|---|
| ① | 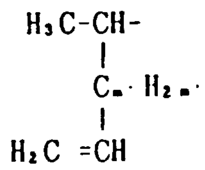 | 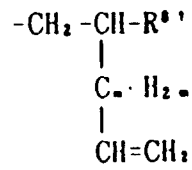 |
| ② | 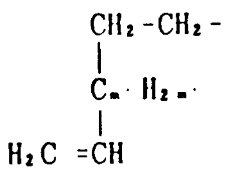 | 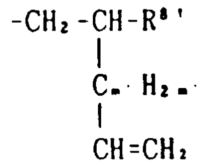 |
| ③ | 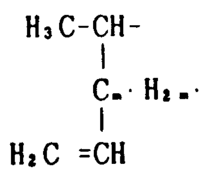 | 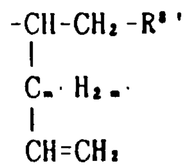 |
| ④ | 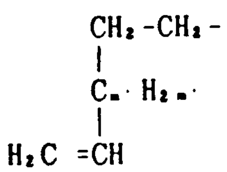 | 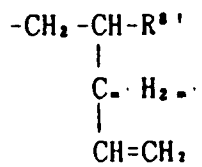 |
| ⑤ | 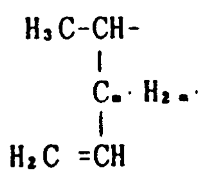 | 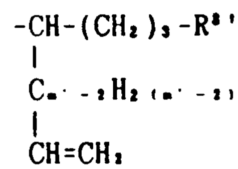 |
| ⑥ | 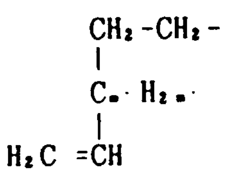 | 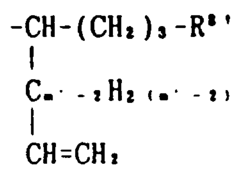 |

(5) Hydroxylation Reaction of Ethylene Polymer (III')

There are the following three methods for the hydroxylation reaction. In a method ①, α-positions at both the ends of the polymer are hydroxylated ($-CH_2-CH_2-OH$) and in methods ② and ③, β-positions thereof are hydroxylated

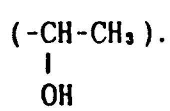

Method ① : The polymer (III') is reacted with diborane and then reacted with an alkali metal hydroxide and hydrogen peroxide.

Method ② : The polymer (III') is reacted with sulfuric acid and water.

Method ③ : The polymer (III') is reacted with mercuric acetate and water and then reacted with sodium borohydride.

Methods ① to ③ will now be illustrated in detail.

Method ①

The reaction of the polymer (III') with diborane is ordinarily carried out at 100 to 200 °C for 1 minute to 10 hours preferably in the presence of a solvent such as an ether. As the ether there are preferably used those having a boiling point of at least 100 °C, for example, aliphatic ethers such as di-n-butyl ether, di-s-butyl ether, di-n-amyl ether and di-i-amyl ether.

The diborane is ordinarily used in the form of a solution in tetrahydrofuran in a proportion of 0.2 to 100 moles, preferably 0.5 to 20 moles to 1 mole of the whole amount of the diolefin compound used in the foregoing (1) and (3).

The reaction with an alkali metal hydroxide and hydrogen peroxide is generally carried out at 0 to 100 °C for 1 hour to 1 week. As the alkali metal hydroxide, there are generally used sodium hydroxide and potassium hydroxide, in general in the form of aqueous solutions. The hydrogen peroxide is ordinarily used as its aqueous solution.

The alkali metal hydroxide and hydrogen peroxide are ordinarily used in excessive amounts, but it is sufficient to use them respectively in an amount of at least equimole to the diborane used above.

Method ②

The reaction of the polymer (III') of with sulfuric acid and water is ordinarily carried out in the presence of water or a mixture of water and ether at 80 to 150 °C for 1 minute to 10 hours.

Method ③

The reaction of the polymer (III') of with mercuric acetate and water is ordinarily carried out in the presence of a mixture of water and ether at 80 to 150 °C for 1 minute to 10 hours.

The reaction of the product obtained in this way with sodium borohydride can be carried out in the similar manner to the above described reaction of mercuric acetate and water.

(6) Reaction with silane compound or carboxylic acid

The silane compound used is represented by the general formula, $R^{1'}{}_3SiY'$ in which $R^{1'}$ is a hydrocarbon group containing 1 to 5 carbon atoms, preferably a methyl or ethyl group and Y' is a halogen atom such as chlorine, bromine, fluorine or iodine.

The carboxylic acid is represented by the general formula, $R^{2'}COOH$ in which $R^{2'}$ is a hydrocarbon group containing 1 to 5 carbon atoms, preferably a methyl or ethyl group.

The reaction of the dihydroxypolyethylene obtained in the foregoing (5), with a silane compound or carboxylic acid can be carried out by the commonly used method in the case of trialkylsilylating or esterificating an alcohol.

For example, the reaction with the silane compound is ordinarily carried out initially at 0 to 50 °C for 1 minute to 5 hours and further at 100 to 150 °C for 1 to 10 hours, preferably in the presence of a solvent such as an amine compound. As the amine compound there are most preferably used those having a boiling point of at least 100 °C, such as pyridine.

The esterification reaction can be conducted with either a carboxylic acid alone or in combination with a small amount of concentrated sulfuric acid or dry hydrogen chloride. Furthermore, a carboxylic halide can be used instead of the carboxylic acid.

The amount of the silane compound or carboxylic acid used is preferably at least 2 times by mole as much as the foregoing ethylene polymer having hydroxyl groups at both ends.

As described above, the ethylene polymer (I') can be produced.

Compound (II )

The compound (II) is represented by the general formula, YO-R-OY in which R is a divalent hydrocarbon group containing 2 to 20 carbon atoms, preferably a divalent saturated or unsaturated aliphatic hydrocarbon group containing 2 to 12 carbon atoms and Y is a hydrogen atom, $-SiR^8{}_3$ or

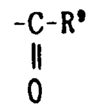

wherein $R^8$ and $R^9$ are hydrocarbon groups each containing 1 to 5 carbon atoms, preferably an alkyl group, more preferably a methyl or ethyl group.

Examples of the compound (II) are saturated aliphatic diol compounds such as ethylene glycol, propane diol, butane diol, pentane diol, hexane diol, heptane diol and octane diol and unsaturated aliphatic diol compounds such as butene diol, pentene diol and hexene diol.

In addition, a compound in which the hydrogen atom in the hydroxyl group of the diol compound is substituted by trimethylsilyl group or acetyl group can also be used.

Compound (II')

Compound (II') is represented by the general formula

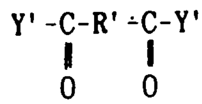

in which R' is a divalent hydrocarbon group containing 1 to 12 carbon atoms, preferably a divalent saturated or unsaturated aliphatic or alicyclic hydrocarbon group containing 1 to 12 carbon atoms and Y' is -OH, $-OR^{3'}$ a halogen atom or $-SO_3R^{4'}$, $R^{3'}$ being a hydrocarbon containing 1 to 5 carbon atoms, preferably an alkyl group, more preferably a methyl or ethyl group and $R^{4'}$ heing a hydrocarbon group containing 1 to 20 carbon atoms, which can contain a halogen atom, preferably an aryl group or aralkyl group containing 6 to 12 carbon atoms.

Examples of Y':-OH, $-OCH_3$, $-OC_2H_5$, $-O{\bullet}n\text{-}C_3H_7$, $-O{\bullet}i\text{-}C_3H_7$, $-O{\bullet}i\text{-}C_4H_9$, -Cl, -Br, -I,

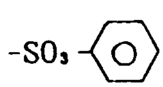 , 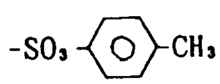 , 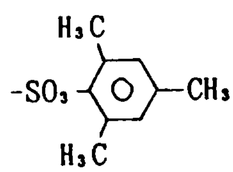 ,

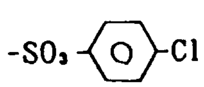 , 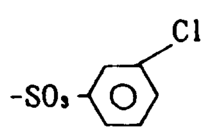 , 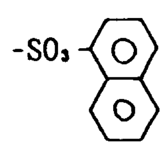

Above all, Y' is preferably -OH, $-OCH_3$, $-OC_2H_5$, -Cl or

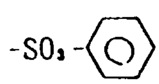 .

Examples of compound (II') are saturated aliphatic dicarboxylic acids such as malonic acid, succinic acid, glutaric acid, adipic acid, pimelic acid, suberic acid, azelaic acid, sebacic acid, nonanedicarboxylic acid, decanedicarboxylic acid, dodecanedicarboxylic acid and the like; unsaturated aliphatic dicarboxylic acids such as fumaric acid, maleic acid, citraconic acid, itaconic acid, mesaconic acid, 1,4-butenedicarboxylic acid and the like; saturated alicyclic dicarboxylic acids such as cyclohexanedicarboxylic acid, camphoric acid and the like; dialkyl esters of the above described dicarboxylic acids such as dimethyl esters, diethyl esters, di-n-propylesters, di-i-butyl esters and the like; and dihalides of the above described dicarboxylic acids such as dichlor ides and dibromides.

Polycondensation of Ethylene polymer (I) or (I') with Compound (II) or (II')

The polycondensation reaction of the ethylene polymer (I) or (I') respectively with the compound (II) or (II') is ordinarily carried out in the presence of a solvent. As the solvent, it is preferable to use a hydrocarbon, preferably an aromatic hydrocarbon having a boiling point of 80 °C or higher, such as toluene and xylene.

The reaction is generally carried out at 50 to 250 °C, preferbly 100 to 200 °C, for 1 to 100 hours, preferably 5 to 50 hours. Particularly, it is desirable to effect the reaction under reduced pressure at 150 to 200 °C after removing the solvent.

In the polycondensation reaction, furthermore, it is possible to use titanium tetraalkoxides such as titanium tetrapropoxide, titanium tetrabutoxide, titanium tetrahexyloxide, etc. as a catalyst so as to promote the the reaction. In order to trap the by products, trapping agents can be used, for example, amines.

In addition, ammonium salts such as benzyltriethylammonium chloride, etc. can be used as a reaction promoter, in particular, in the case of the polycondensation of the polymer (I') with the compound (II').

In the polycondensation reaction, furthermore, the molecular weight of the ethylene polymer according to the present invention can ordinarily be increased by raising the reaction temperature, lengthening the reaction time or using a catalyst.

According to the process of the present invention, an ethylene polymer degradable by microorganisms can effectively be produced.

The following examples are given in order to illustrate the present invention in detail without limiting the scope of the invention claimed.

Example 1

a) Synthesis of Ethylene Polymer (I)

3 millimols of 2,7-di(4-toluyl)-1,7-octadiene was dissolved in 25 ml of a mixed solution of equal volumes of heptane and toluene to prepare a solution. This solution was added to 9 millimols of s-butyllithium and stirred at room temperature for 5 days. A dilithio compound, precipitated from the reaction solution, was filtered and washed with 25 ml of heptane.

200 ml of dried toluene was charged in a reaction vessel of 500 ml, adequately purged with nitrogen, to which 7 millimols of tetramethylethylenediamine was further added. After cooling to 0 °C , the above described dilithio compound was introduced and ethylene was added with stirring. The stirring was continued for 24 hours while supplementing ethylene to the system so that the pressure of ethylene was maintained at 2 atm and an ethylene polymer was thus synthesized.

After evacuating the system to remove the residual ethylene monomer, the system was cooled at -78 °C , and dry carbon dioxide was introduced. While maintaining the inner pressure of carbon dioxide at 2 atm, the reaction system was heated to room temperature and stirred for a further 5 hours.

The product was poured into 10 % hydrochloric acid and the precipitate produced was subjected to filtration. The precipitate was extracted with hot toluene for 2 days, the toluene was cooled and the resulting solid was separated by filtration and then dried. A polymer was obtained with a yield of 1.6 g which had a number average molecular weight ($\overline{M}n$) of $1.5 \times 10^3$ measured by GPC.

When the IR spectrum was measured a peak due to carboxylic acid was observed at 1700 $cm^{-1}$. When the proton NMR was measured, a broad peak due to the hydrogen of the carboxylic acid was observed near 11 ppm.

The number average molecular weight was sought from the intensity ratio of the peak at 1.3 ppm due to the ethylene polymer and the peak at 2.3 ppm due to the hydrogen of the methylene group adjacent to the carboxylic acid to give an $\overline{M}n$ of $1.7 \times 10^3$. This was well in agreement with the value obtained by GPC.

Thus, it was concluded that an ethylene having carboxyl groups at both ends was synthesized.

1.5 g of the thus obtained ethylene polymer (I) having carboxyl groups at both ends was dissolved in 200 ml of xylene at 120 °C, to which 8.3 ml of boron trifluoride-methanol complex was added. The mixture was reacted while heating and refluxing for 6 hours, after which the solvent was removed under reduced pressure to obtain the desired product.

Measurement of the IR spectrum showed peaks due to the ester bond near 1740 $cm^{-1}$ and 1150 $cm^{-1}$.

Thus, it was concluded that the ethylene polymer(I) having both ends-carboxylated was converted into the ethylene polymer (I) having both ends-methyl esterified.

b) Polycondensation with 1,8-Octanediol Diacetate

1.5 g of the above described 'both ends-carboxylated' ethylene polymer (I) and 1 millimol of 1,8-octanediol diacetate were mixed, heated at 180 °C and melted.

This melted mixture was reacted at a reduced pressure of 2 mmHg and the same temperature for 36 hours and the temperature was lowered to room temperature to obtain a solid polymer. Then this polymer was dissolved in toluene and washed with methanol repeatedly, thus obtaining an ethylene polymer in accord with the present invention.

When the IR spectrum of this polymer was measured a peak (1700 $cm^{-1}$) due to the carboxylic group had disappeared and peaks due to the ester bond were newly observed near 1740 $cm^{-1}$ and 1150 $cm^{-1}$.

The $\overline{M}n$ obtained by GPC was 4.8 x $10^3$.

From the above described results it was concluded that the resulting ethylene polymer was a polymer consisting of the following recurring units:

$$-[-\underset{\underset{O}{\|}}{C}-(-CH_2\cdot CH_2-)_n-\underset{\underset{O}{\|}}{C}-O-(-CH_2-)_8-O-]-$$

$$n \fallingdotseq 53$$

Example 2

a) Synthesis of Ethylene Polymer (I)

The 'both ends-methylesterified' ethylene polymer (I) was synthesized in an analogous manner to Example 1.

b) Polycondensation with Ethylene Glycol

1.5 g of the ethylene polymer (I) obtained as described above and 0.06 ml of ethylene glycol were mixed and dissolved in 40 ml of toluene with refluxing. One drop of titanium tetrabutoxide was then added to this solution and reacted for 1 hour while toluene-refluxing under a nitrogen gas stream.

The mixed solution, cooled to room temperature, was poured into methanol to obtain a precipitate. One drop of titanium tetrabutoxide was added to this precipitate and processed for 8 hours at 180 °C at a reduced pressure of 4 mmHg. Then, the temperature was lowered to room temperature to obtain a solid ethylene polymer.

The $\overline{M}n$ obtained by GPC was 6 x $10^3$.

From the above described results, it was concluded that the resulting ethylene polymer was a polymer consisting of the following recurring units:

$$-[-\underset{\underset{O}{\|}}{C}-(-CH_2\cdot CH_2-)_n-\underset{\underset{O}{\|}}{C}-O-(-CH_2-)_2-O-]-$$

$$n \fallingdotseq 53$$

Example 3

a) Synthensis of Ethylene Polymer (I)

The polymerization of ethylene was carried out in an analogous manner to Example 1 except changing the toluene used as a solvent in the polymerization of ethylene to xylene and the polymerization time to 48 hours. A part of the resulting polymer was taken and subjected to measurement of $\overline{M}n$ by GPC to obtain an $\overline{M}n$ of $2.8 \times 10^3$.

The polymer was then reacted with carbon dioxide in an analogous manner to Example 1. After exhausting the carbon dioxide, a solution of 6 millimols of benzenesulfonyl chloride dissolved in 60 ml of xylene was added to the reaction solution and stirred at 120 °C for 30 minutes. The resulting mixture was hot-filtered, further heated and concentrated until the amount of the solution was approximately 30 ml.

b) Polycondensation with 1,4-Butanediol

To the concentrated solution was added a solution of 1.5 millimoles of 1,4-butanediol dissolved in 3 ml of xylene and also 1.5 milimoles of tetramethylethylenediamine. This mixed solution was reacted at 120 °C for 24 hours, the temperature lowered to room temperature, and ethanol added to precipitate a product. The polymer was obtained in a yield of 3.1 g and had a number average molecular weight of $1.0 \times 10^4$. In the IR spectrum of the polymer it was difficult to see a peak due to carboxylic acid but an absorption due to the ester bond was observed in the vicinity of 1740 $cm^{-1}$.

From the above described results, it was concluded that the resulting ethylene polymer was a polymer consisting of the following recurring units:

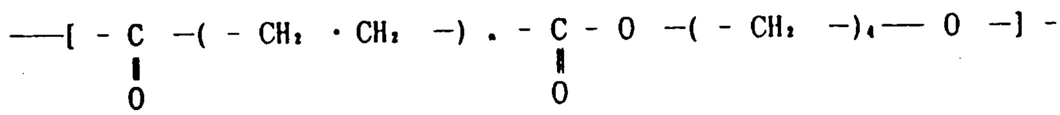

$n \fallingdotseq 100$

Example 4

a) Synthesis of Ethylene Polymer (I')

1000 ml of toluene was charged to a flask of 3000 ml, sufficiently purged by nitrogen gas, and then cooled at -65 °C , to which 1.2 millimoles of 1,7-octadiene was added at the same temperature. 10 millimoles of $Al(C_2N_5)_2Cl$ and 1 millimole of $V(2\text{-methyl-1,3-butanedionato})_3$ were then added thereto and stirred for 30 minutes. Further, 4.5 g of ethylene was introduced over 2 hours and 1.2 millimoles of 1,7-octadiene was then added thereto. After stirring for 10 minutes the reaction solution was poured into ethanol and filtered to obtain a polymer having a number average molecular weight ($\overline{M}n$) of $4.9 \times 10^3$ measured by the GPC method,with a yield of 4.3 g.

Measurement of the proton NMR of the above described polymer gave a signal based on the proton of the terminal double bonds at 5.0 ppm and 5.8 ppm. The assignments thereof are as follows:

| δ (ppm) | Assignment | δ (ppm) | Assignment |
|---|---|---|---|
| 5.0 | $-CH=C\underline{H}_2$ | 5.8 | $-C\underline{H}=CH_2$ |

From the intensity ratio of this signal and the peak of 1.3 ppm due to the ethylene polymer was obtained an Mn of $4.6 \times 10^3$ assuming that vinyl groups were present at both ends. This value was substantially in agreement with that obtained by the GPC method. It was concluded therefrom that the thus obtained polymer was an ethylene polymer having vinyl groups at both ends.

The above described polymer was added to 200 ml of n-butyl ether, to which a solution of diborane in tetrahydrofuran was added at room temperatrue while vigorously stirring and passing nitrogen. The amount of the diborane added was 2.5 millimoles. After stirring for 1 hour at the refluxing temperature, the

temperature was lowered and 200 ml of a 3 N aqueous solution of sodium hydroxide and 200 ml of a 30 % aqueous solution of hydrogen peroxide were added thereto, followed by stirring for 1 day. The resulting polymer was adequately washed with water, then washed with acetone and dried.

There was found a broad peak at 3300 to 3500 $cm^{-1}$ in the IR (infrared absorption spectrum) chart of the thus formed polymer, from which it was concluded that the resulting polymer was an ethylene polymer (I') having hydroxy groups at both the ends.

b) Polycondensation with Adipic Dichloride

The ethylene polymer (I') obtained as described above and 1 millimole of adipic dichloride were dissolved in 20 ml of toluene at 120 °C. To this solution was dropwise added 1 millimole of tetramethylethylenediamine and the mixture was reacted at 120 °C for 24 hours. After removing the byproduct by hot-filtration, the reaction mixture was cooled to room temperature and the precipitated polymer was recovered.

When this polymer was subjected to measurement of the IR spectrum, a peak due to the hydroxyl group was not found, but there was found an absorption peak due to the ester group at 1740 $cm^{-1}$. The polymer had an $\overline{M}n$ of 2.0 x $10^4$ obtained by GPC.

From the above described results, it was concluded that the resulting ethylene polymer was a polymer consisting of the following recurring units:

$$—[-O-(-CH_2\cdot CH_2-)_n-O-\underset{\underset{O}{\|}}{C}-(-CH_2-)_4—\underset{\underset{O}{\|}}{C}-]-$$

$$n \fallingdotseq 175$$

Example 5

a) Synthesis of Ethylene Polymer (I')

Example 4 was repeated except introducing 1.5 g of ethylene over 30 minutes, thus synthesizing an ethylene polymer (I') having hydroxyl groups at both the ends and an Mn of 1.2 x $10^3$ measured by GPC.

b) Polycondensation with Succinic Acid Diethyl Ester

1.2 g of the ethylene polymer (I') obtained as described above and 1 millimole of diethyl succinate were mixed. One drop of titanium tetrabutoxide was then added, and the mixture was reacted at 180 °C for 1 hour in a nitrogen gas flow. Further, the mixture was treated at 180 °C and a reduced pressure of 2 mmHg for 6 hours and then the temperature was lowered to room temperature to obtain a solid ethylene polymer.

When this polymer was subjected to measurement of the IR spectrum, there was found no absorption peak due to the hydroxyl group. The polymer had an $\overline{M}n$ of 5.0 x $10^3$.

From the above described results, it was concluded that the resulting ethylene polymer was a polymer consisting of the following recurring units:

$$—[-O-(-CH_2\cdot CH_2-)_n-O-\underset{\underset{O}{\|}}{C}-(-CH_2-)_2—\underset{\underset{O}{\|}}{C}-]-$$

$$n \fallingdotseq 43$$

Example 6

a) Synthesis of Ethylene Polymer (I')

1000 ml of toluene was charged to a 3000 ml flask, sufficiently purged by nitrogen gas, and then cooled at -78 °C , to which 0.6 millimole of 1,9-decadiene was added at the same temperature. 100 millimoles of $Al(C_2H_5)_2Cl$ and 20 millimoles of $V(acetylacetonato)_3$ were then added thereto and stirred for 30 minutes. Then 1.5 g of ethylene was introduced over 30 minutes and 0.6 millimole of 1,9-decadiene was then added. After stirring for 30 minutes the reaction solution was poured into ethanol and filtered to obtain a polymer having a number average molecular weight ($\overline{M}n$) of 2.6 x $10^3$ measured by the GPC method with a yield of 1.2 g.

Then the procedure of Example 4 was repeated except using 1 millimole of diborane to synthesize a 'both ends-hydroxylated' ethylene polymer (I').

The ethylene polymer (I') and 10 g of trimethylchlorosilane were added to 250 ml of pyridine, stirred at 25 °C for 1 hour and then reacted for 4 hours under refluxing of the pyridine. The resulting polymer was washed with ethanol and then dried.

Measurement of the proton NMR of the above described polymer gave a signal based on the proton due to the proton of $-Si(CH_3)_3$ at $\delta$ = 0.08 ppm. As a result of the IR analysis, an absorption spectrum of the hydroxyl group was not observed. Thus it was concluded that the resulting polymer was an ethylene polymer (I') having trimethylsilyloxy groups at both ends.

b) Polycondensation with Succinyl Dichloride

1.3 g of the 'both ends-trimethylsilylhydroxylated' ethylene polymer (I'), 0.5 millimole of succinyl dichloride and 10 mg of benzyltriethylammonium chloride were reacted at 150 °C until generation of trimethylsilane chloride was not measured and then further reacted at 180 °C for 1 hour. The temperature was lowered to room temperature to obtain a solid ethylene polymer.

When this polymer was subjected to measurement of the IR spectrum, an absorption spectrum due to the ester group was found in the vicinity of 1740 $cm^{-1}$ and 1150 $cm^{-1}$. The polymer had an $\overline{M}n$ of 1.5 x $10^4$ obtained by GPC.

From the above described results it was concluded that the resulting ethylene polymer was a polymer consisting of the following recurring units:

$$—[-O—(-CH_2 \cdot CH_2—)_n-O-\underset{\underset{O}{\|}}{C}—(-CH_2—)_2—\underset{\underset{O}{\|}}{C}—]-$$

$$n \fallingdotseq 93$$

## Claims

**1.** An ethylene polymer comprising a recurring unit represented by the general formula

$$—(-\underset{\underset{O}{\|}}{C}-A-\underset{\underset{O}{\|}}{C}-O-R-O—)— \quad \text{or} \quad —(-O-A-O-\underset{\underset{O}{\|}}{C}-R'-\underset{\underset{O}{\|}}{C}—)—$$

in which R is a divalent hydrocarbon group containing 2 to 20 carbon atoms, R' is a divalent hydrocarbon group containing 1 to 20 carbon atoms and A is a polyethylene segment comprising a recurring unit represented by the formula $-(-CH_2 \cdot CH_2-)-$ and having a number average molecular weight (Mn) of 300 to 300,000, and the ethylene polymer having a number average molecular weight (Mn) of 500 to 5,000,000.

2. A process for the production of the ethylene polymer as claimed in Claim 1 which process comprises polycondensation of an ethylene polymer (I) or (I') respectively comprising a recurring unit represented by -( - $CH_2$ • $CH_2$ -) - and having

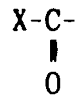

group or X'O- group at both ends and an Mn of 300 to 300,000 respectively with a compound (II) or (II') respectively represented by the general formula YO-R-OY or

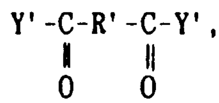

in which X is -OH, -$OR^1$, a halogen atom or -$SO_3R^2$, X' is a hydrogen atom, -$SiR^{1'}_3$ or

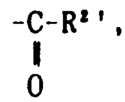

Y is a hydrogen atom, -$SiR^3_3$ or

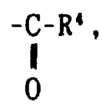

Y' is -OH, -$OR^{3'}$, a halogen atom or -$SO_3R^{4'}$, $R^1$ is a hydrocarbon group containing 1 to 5 carbon atoms, $R^2$ is a hydrocarbon group containing 1 to 20 carbon atoms, $R^3$ and $R^4$ are hydrocarbon groups each containing 1 to 5 carbon atoms, $R^{1'}$, $R^{2'}$ and $R^{3'}$ are hydrocarbon groups each containing 1 to 5 carbon atoms, $R^{4'}$ is a hydrocarbon group containing 1 to 20 carbon atoms and R and R' are as defined in Claim 1.

3. A process as claimed in Claim 2 wherein the ethylene polymer (I) in which X is -OH or -$SO_3R^2$ in

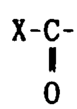

is produced by polymerizing ethylene in the presence of a dilithio compound formed by reaction of a diolefin compound (III) represented by the general formula, $H_2C=CR^3$-$R^4$-$CR^3=CH_2$ wherein $R^3$ is a hydrocarbon group containing 1 to 10 carbon atoms and $R^4$ is a divalent hydrocarbon group containing 1 to 20 carbon atoms, with an organolithium compound (IV), and a diamine compound (V), then reacting with carbon dioxide and further reacting with a proton donor or sulfonyl halide represented by the general formula $ZSO_2R^2$ wherein Z is a halogen atom and $R^2$ has the same meaning as descried above.

4. A process as claimed in Claim 2 wherein the ethylene polymer (I) in which X is -$OR^1$ or a halogen atom in

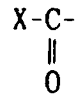

is produced by polymerizing ethylene in the presence of a dilithio compound formed by reaction of a diolefin compound (III) represented by the general formula, $H_2C=CR^3-R^4-CR^3=CH_2$ wherein $R^3$ is a hydrocarbon group containing 1 to 10 carbon atoms and $R^4$ is a divalent hydrocarbon group containing 1 to 20 carbon atoms, with an organolithium compound (IV), and a diamine compound (V), then reacting with carbon dioxide, further reacting with a proton donor and then reacting with an alcohol represented by $R^1OH$ wherein $R^1$ is a hydrocarbon group containing 1 to 5 carbon atoms or thionyl halide.

**5.** A process as claimed in Claim 3 or Claim 4 wherein the reaction of the diolefin compound (III) with the organolithium compound (IV) is carried out in the presence of an organic solvent.

**6.** A process as claimed in any one of Claims 3 to 5 wherein molar ratio of compound (IV) to compound (III) is in the range of 0.1 to 30.

**7.** A process as claimed in any one of Claims 3 to 6 wherein the diamine compound (V) is represented by the general formula $R^6{}_2N-R^7-N\,R^6{}_2$ wherein $R^6$ is a hydrocarbon group containing 1 to 5 carbon atoms and $R^7$ is a divalent hydrocarbon group containing 1 to 10 carbon atoms.

**8.** A process as claimed in any one of Claims 3 to 7 wherein the diamine compound (V) is used in a proportion of 0.1 to 20 moles to 1 mole of the diolefin compound (III).

**9.** A process as claimed in any one of Claims 3 to 8 wherein the proton donor is at least one member selected from water, methanol, ethanol, propanol, hydrochloric acid, nitric acid and sulfuric acid.

**10.** A process as claimed in Claim 3 or any one of Claims 5 to 9 when dependent on Claim 3 wherein the sulfonyl halide is represented by the general formula $ZSO_2R^2$ wherein Z is a halogen atom and $R^2$ is a hydrocarbon group containing 1 to 20 carbon atoms.

**11.** A process as claimed in any one of Claims 4 to 9 wherein the thionyl halide is at least one member selected from $SOCl_2$, $SO_2Cl_2$, $SOBr_2$, $SOI_2$, $SO_2Br_2$ and $SO_2I_2$.

**12.** A process as claimed in any one of Claims 2 to 11 wherein the polycondensation of the ethylene polymer (I) with the compound (II) is carried out in the presence of a solvent.

**13.** A process as claimed in any one of Claims 2 to 12 wherein the polycondensation of the ethylene polymer (I) with the compound (II) is carried out at 50 to 250 °C for 1 to 100 hours.

**14.** A process as claimed in any one of Claims 2 to 13 wherein the polycondensation of the ethylene polymer (I) with the compound (II) is carried out in the presence of a catalyst selected from titanium tetraalkoxides such as titanium tetrapropoxide, titanium tetrabutoxide and titanium tetrahexyloxide.

**15.** A process as claimed in any one of claims 2 to 14 wherein the ethylene polymer (I') in which X' in -X'O is a hydrogen atom is produced by polymerizing ethylene in the presence of a reaction product of a polymerization catalyst comprising a vanadium chelate compound and dialkylaluminum halide, and an $\omega$, $\omega'$-diolefin compound containing 5 to 20 carbon atoms, reacting with the diolefin compound, then reacting with a proton donor and hydroxylating the resulting ethylene polymer (III') having vinyl groups at both the ends thereof.

**16.** A process as claimed in any one of Claims 2 to 15 wherein the ethylene polymer (I') in which X' in -X'O is $-SiR^{1'}{}_3$ or

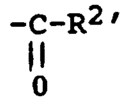

wherein $R^{1'}$ and $R^{2'}$ are hydrocarbon groups containing 1 to 5 carbon atoms is produced by polymerizing ethylene in the presence of a reaction product of a polymerization catalyst comprising a vanadium chelate compound and dialkylaluminum halide, and an ω, ω'-diolefin compound containing 5 to 20 carbon atoms, reacting with the diolefin compound, then reacting with a proton donor, hydroxylating the resulting ethylene polymer (III') having vinyl groups at both ends thereof and reacting the hydrocylated ethylene polymer with a silane compound represented by $R^{1'}{}_3SiY'$ wherein $R^{1'}$ has the same meaning as described above and Y' is a halogen atom or a carboxylic acid represented by the general formula $R^{2'}COOH$ wherein $R^{2'}$ has the same meaning as described above.

**17.** A process as claimed in Claim 15 or Claim 16 wherein the vanadium chelate compound and dialylaluminum halide are present in a proportion of 1 to 1000 moles of the dialkylaluminum halide to 1 mole of the vanadium chelate compound.

**18.** A process as claimed in any one of Claims 15 to 17 wherein the ω, ω'-diolefin compound is represented by the general formula $H_2C=CH\text{-(}-C_mH_{2m}\text{-)}-CH=CH_2$ wherein m is 1 to 15.

**19.** A process as claimed in any one of Claims 15 to 18 wherein the reaction of the polymerization catalyst and diolefin compound is carried out in the presence of a solvent.

**20.** A process as claimed in any one of Claims 15 to 19 wherein the reaction ratio of the polymerization catalyst and diolefin compound is so adjusted that the vanadium compound in the polymerization catalyst is in a proportion of 0.1 to 10 moles per 1 mole of the diolefin compound.

**21.** A process as claimed in any one of Claims 15 to 20 wherein the hydroxylation of the ethylene polymer (III') is carried out by reacting the ethylene polymer (III') with diborane and then reacting with an alkali metal hydroxide and hydrogen peroxide.

**22.** A process as claimed in any one of Claims 15 to 21 wherein the hydroxylation of the ethylene polymer (III') is carried out by reacting the ethylene polymer (III') with sulfuric acid and water.

**23.** A process as claimed in any one of Claims 15 to 22 wherein the hydroxylation of the ethylene polymer (III') is carried out by reacting the ethylene polymer (III') with mercuric acetate and water and then reacting with sodium borohydride.

## Patentansprüche

**1.** Ethylenpolymer, welches eine durch die folgenden allgemeinen Formeln repräsentierte Repetiereinheit enthalt:

-(-CO-A-CO-O-R-O-)- oder -(-O-A-CO-R'-CO-)-,

in denen
- R eine divalente Kohlenwasserstoffgruppe mit 2 bis 20 Kohlenstoffatomen,
- R' eine divalente Kohlenwasserstoffgruppe mit 1 bis 20 Kohlenstoffatomen und
- A ein Polyethylensegment darstellen, welches eine der Formel $-(-CH_2 \bullet CH_2-)-$entsprechende Repetiereinheit enthalt und ein zahlenmittleres Molekulargewicht (Mn) von 300 bis 300.000 aufweist,

wobei das Ethylenpolymer ein zahlenmittleres Molekulargewicht (Mn) von 500 bis 5.000.000 aufweist.

**2.** Verfahren zur Herstellung eines Ethylenpolymeres gemäß Anspruch 1, welches die Polykondensation eines Ethylenpolymeres (I) bzw. (I'), das eine $-(-CH_2 \bullet CH_2-)-$entsprechende Repetiereinheit enthält, an beiden Enden einen Rest X-CO- oder X'O-aufweist und ein zahlenmittleres Molekulargewicht (Mn) von 300 bis 300.000 hat, mit einer Verbindung (II) bzw. (II') umfaßt, welche der allgemeinen Formel YO-R-OY oder Y'-CO-R'-CO-Y' entspricht, wobei
X -OH, $OR^1$, ein Halogenatom, oder $SO_3R^2$ und
X' ein Wasserstoffatom, $SiR^{1'}_3$ oder -CO-$R^{2'}$ darstellt,
Y ein Wasserstoffatom, $SiR^3_3$ oder -CO-$R^4$ und
Y' -OH, $OR^{3'}$, ein Halogenatom, oder $SO_3R^{4'}$ darstellt, sowie
R' einen Kohlenwasserstoffrest mit 1 bis 5 Kohlenstoffatomen,
$R^2$ einen Kohlenwasserstoffrest mit 1 bis 20 Kohlenstoffatomen und
$R^3$ und $R^4$ jeweils Kohlenwasserstoffreste mit 1 bis 5 Kohlenstoffatomen bedeuten, und
$R^{1'}$, $R^{2'}$ und $R^{3'}$ jeweils Kohlenwasserstoffreste mit 1 bis 5 Kohlenstoffatomen und
$R^{4'}$ einen Kohlenwasserstoffrest mit 1 bis 20 Kohlenstoffatomen darstellen und
R und R' wie in Anspruch 1 definiert sind.

**3.** Verfahren gemäß Anspruch 2, bei welchem das Ethylenpolymer (I), in dem X in der Formel X-CO- die Reste -OH oder $SO_3R^2$ darstellt, mittels Polymerisation von Ethylen in Anwesenheit einer Dilithioverbindung und einer Diaminverbindung (V) erhalten wird, wobei die Dilithioverbindung durch Umsetzung einer Diolefinverbindung (III) der allgemeinen Formel

$H_2C=CR^3\text{-}R^4\text{-}CR^3=CH_2$,

in der $R^3$ einen Kohlenwasserstofflest mit 1 bis 10 Kohlenstoffatomen und $R^4$ einen divalenten Kohlenwasserstoffrest mit 1 bis 20 Kohlenstoffatomen darstellt, mit einer Organolithiumverbindung (IV) und anschließende Umsetzung mit Kohlendioxid und weiter mit einem Protonendonor oder einem Sulfonylhalogenid erhalten wird, welches der allgemeinen Formel $ZSO_2R^2$ entspricht, worin Z ein Halogenatom bedeutet und $R^2$ wie oben definiert ist.

**4.** Verfahren gemäß Anspruch 2, bei welchem das Ethylenpolymer (I), in dem X in der Formel X-CO- den Rest -$OR^1$ oder ein Halogenatom darstellt, mittels Polymerisation von Ethylen in Anwesenheit einer Dilithioverbindung und einer Diaminverbindung (V) erhalten wird, wobei die Dilithioverbindung durch Umsetzung einer Diolefinverbindung (III) der allgemeinen Formel

$H_2C=CR^3\text{-}R^4\text{-}CR^3=CH_2$,

in der $R^3$ einen Kohlenwasserstofrest mit 1 bis 10 Kohlenstoffatomen und $R^4$ einen divalenten Kohlenwasserstoffrest mit 1 bis 20 Kohlenstoffatomen darstellt, mit einer Organolithiumverbindung (IV), anschließender Umsetzung mit Kohlendioxid, weiter durch $R^1OH$ repräsentierten Alkohol erhalten wird, wobei $R^1$ einen Kohlenwasserstoffrest mit 1 bis 5 Kohlenstoffatomen oder ein Thionylhalogenid darstellt.

**5.** Verfahren gemäß Anspruch 3 oder 4, bei welchem die Umsetzung der Diolefinverbindung (III) mit der Organolithiumverbindung in Anwesenheit eines organischen Lösungsmittels erfolgt.

**6.** Verfahren gemäß einem der Ansprüche 3 bis 5, bei welchem das Molverhältnis der Verbindung (IV) zur Verbindung (III) im Bereich von 0,1 bis 30 liegt.

**7.** Verfahren gemäß einem der Ansprüche 3 bis 6, bei dem die Diaminverbindung (V) der allgemeinen Formel $R^6_2N\text{-}R^7\text{-}NR^6_2$ entspricht, in welcher $R^6$ eine Kohlenwasserstoffgruppe mit 1 bis 5 Kohlenstoffen und $R^7$ eine divalente Kohlenwasserstoffgruppe mit 1 bis 10 Kohlenstoffen darstellt.

**8.** Verfahren gemäß einem der Ansprüch 3 bis 7, bei dem die Diaminverbindung (V) in einem Mengenverhältnis von 0,1 bis 20 Mol auf 1 Mol der Diolefinverbindung (III) verwendet wird.

**9.** Verfahren gemäß einem der Ansprüche 3 bis 8, bei dem der Protonendonor mindestens eine aus Wasser, Methanol, Ethanol, Propanol, Salzsäure, Salpetersäure und Schwefelsäure ausgewählte Verbindung ist.

**10.** Verfahren gemäß Anspruch 3 oder gemäß einem der Ansprüche 5 bis 9 im Falle der Abhängigkeit von Anspruch 3, bei dem das Sulfonylhalogenid durch die allgemeine Formel $ZSO_2R^2$ dargestellt wird, in der Z ein Halogenatom ist und $R^2$ einen Kohlenwasserstoffrest mit 1 bis 20 Kohlenstoffen darstellt.

11. Verfahren gemäß einem der Ansprüche 4 bis 9, bei welchem das Thionylhalogenid mindestens eine aus $SOCl_2$, $SO_2Cl_2$, $SOBr_2$, $SOI_2$, $SO_2Br_2$ und $SO_2I_2$ ausgewählte Verbindung darstellt.

12. Verfahren gemäß einem der Ansprüche 2 bis 11, bei welchem die Polykondensation des Ethylenpolymeren (I) mit der Verbindung (II) in Anwesenheit eines Lösungsmittels ausgeführt wird.

13. Verfahren gemäß einem der Ansprüche 2 bis 12, bei dem die Polykondensation des Ethylenpolymeren (I) mit der Verbindung (II) für 1 bis 100 Stunden bei 50 bis 250 °C durchgeführt wird.

14. Verfahren gemäß einem der Ansprüche 2 bis 13, bei dem die Polykondensation des Ethylenpolymeren (I) mit der Verbindung (II) in Anwesenheit eines aus Titantetraalkoxiden wie Titantetrapropoxid, Titantetrabutoxid und Titantetrahexyloxid ausgewählten Katalysators ausgeführt wird.

15. Verfahren gemäß einem der Ansprüche 2 bis 14, bei welchem das Ethylenpolymer (I'), in dem X' in dem Rest -X'O ein Wasserstoffatom darstellt, mittels Polymerisation von Ethylen in Anwesenheit eines Reaktionsproduktes eines eine Vanadiumchelatverbindung und ein Dialkylaluminiumhalogenid enthaltenden Polymerisationskatalysators und einer ω,ω'-Diolefinverbindung mit 5 bis 20 Kohlenstoffatomen, Umsetzen mit der Diolefinverbindung, anschließende Umsetzung mit einem Protonendonor und Hydroxylierung des erhaltenen, an seinen beiden Enden Vinylgruppen aufweisenden Ethylenpolymeren (III') erhalten wird.

16. Verfahren gemäß einem der Ansprüche 2 bis 15, bei welchem das Ethylenpolymer (I'), in dem X' im Rest -X'O den Rest $-SiR^{1'}_3$ oder $-CO-R^{2'}$ darstellt, wobei $R^{1'}$ und $R^{2'}$ jeweils Kohlenwasserstoffreste mit 1 bis 5 Kohlenstoffatomen sind, mittels Polymerisation von Ethylen in Anwesenheit eines Reaktionsproduktes eines eine Vanadiumchelatverbindung und ein Dialkylaluminiumhalogenid enthaltenden Polymerisationskatalysators und einer ω,ω'-Diolefinverbindung mit 5 bis 20 Kohlenstoffatomen, Umsetzen mit der Diolefinverbindung, anschließende Umsetzung einem Protonendonor sowie Hydroxylierung des erhaltenen, an seinen beiden Enden Vinylgruppen aufweisenden Ethylenpolymeren (III') und Umsetzen des hydroxylierten Ethylenpolymeren mit einer $R^{1'}_3SiY'$ entsprechenden Silanverbindung erhalten wird, wobei $R^{1'}$ die oben genannte Bedeutung hat und Y' ein Halogenatom oder eine der allgemeinen Formel $R^{2'}COOH$ entsprechende Carbonsäure darstellt, worin $R^{2'}$ die oben gegeben Bedeutung hat.

17. Verfahren gemäß Anspruch 15 oder 16, bei welchem die Vanadiumchelatverbindung und das Dialkylaluminiumhalogenid in einem Mengenverhältnis von 1 bis 1000 Mol des Dialkylaluminiumhalogenids auf 1 Mol der Vanadiumchelatverbindung vorliegen.

18. Verfahren gemäß einem der Ansprüche 15 bis 17, bei dem die ω,ω'-Diolefinverbindung durch die allgemeine Formel $H_2C=CH-(-C_mH_{2m}-)-CH=CH_2$, in der m 1 bis 15 bedeutet, dargestellt wird.

19. Verfahren gemäß einem der Ansprüche 15 bis 18, bei welchem die Umsetzung des Polymerisationskatalysators mit der Diolefinverbindung in Anwesenheit eines Lösungsmittels durchgeführt wird.

20. Verfahren gemäß einem der Ansprüche 15 bis 19, bei welchem das Umsetzungsverhältnis des Polymerisationskatalysators zur Diolefinverbindung so eingestellt wird, daß die Vanadiumverbindung im Polymerisationskatalysator in einem Verhältnis von 0,1 bis 10 Mol pro 1 Mol der Diolefinverbindung vorliegt.

21. Verfahren gemäß einem der Ansprüche 15 bis 20, bei welchem die Hydroxylierung des Ethylenpolymeren (III') durchgeführt wird, indem man das Ethylenpolymer (III') mit einem Diboran und anschließend mit einem Alkalimetallhydroxid sowie Wasserstoffperoxid umsetzt.

22. Verfahren gemäß einem der Ansprüche 15 bis 21, bei welchem die Hydroxylierung des Ethylenpolymeren (III') durchgeführt wird, indem man das Ethylenpolymer (III') mit Schwefelsäure und Wasser umsetzt.

23. Verfahren gemäß einem der Ansprüche 15 bis 22, bei welchem die Hydroxylierung des Ethylenpolymeren (III') durchgeführt wird, indem man das Ethylenpolymer (III') mit Quecksilberacetat und Wasser und anschließend mit Natriumborhydrid umsetzt.

## Revendications

**1.** Polymère d'éthylène comprenant une unité récurrente représentée par la formule générale

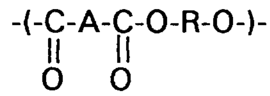

ou

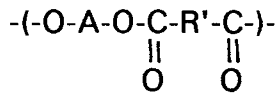

dans laquelle R est un groupement hydrocarboné divalent contenant 2 à 20 atomes de carbone, R' est un groupement hydrocarboné divalent contenant 1 à 20 atomes de carbone et A est un segment polyéthylènique comprenant une unité récurrente représentée par la formule $-(-CH_2 \bullet CH_2-)-$ et ayant une masse moléculaire moyenne en nombre (Mn) de 300 à 300 000, et le polymère d'éthylène ayant une masse moléculaire moyenne en nombre (Mn) de 500 à 5 000 000.

**2.** Procédé pour la préparation du polymère d'éthylène selon la revendication 1 ledit procédé comprenant la polycondensation d'un polymère d'éthylène (I) ou (I') comprenant respectivement une unité récurrente représentée par $-(-CH_2 \bullet CH_2-)-$ et ayant un groupement

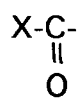

ou un groupement X'O- aux deux extrémités et une Mn de 300 à 300 000 avec respectivement un composé (II) ou (II') représenté respectivement par la formule générale YO-R-OY ou

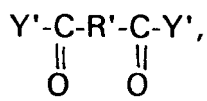

dans laquelle X est -OH, $-OR^1$, un atome d'halogène ou $-SO_3R^2$, X' est un atome d'hydrogène, $-SiR^{1'}{}_3$ ou

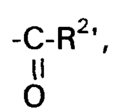

Y est un atome d'hydrogène, $-SiR^3{}_3$, ou

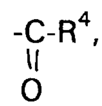

Y' est -OH, $-OR^{3'}$, un atome d'halogène ou $-SO_3R^{4'}$, $R^1$ est un groupement hydrocarboné contenant 1 à 5 atomes de carbone, $R^2$ est un groupement hydrocarboné contenant 1 à 20 atomes de carbone, $R^3$ et $R^4$ sont des groupements hydrocarbonés chacun contenant 1 à 5 atomes de carbone, $R^{1'}$, $R^{2'}$ et $R^{3'}$ sont des groupements hydrocarbonés contenant chacun 1 à 5 atomes de carbone, $R^{4'}$ est un groupement hydrocarboné contenant 1 à 20 atomes de carbone et R et R' sont tels que définis dans la revendication 1.

**3.** Procédé selon la revendication 2, dans lequel le polymère d'éthylène (I) dans lequel X est -OH ou $-SO_3R^2$ dans

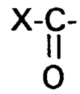

est obtenu en polymérisant de l'éthylène en présence d'un composé dilithio formé par réaction d'un composé dioléfinique (III) représenté par la formule générale, $H_2C=CR^3\text{-}R^4\text{-}CR^3=CH_2$ dans laquelle $R^3$ est groupement hydrocarboné contenant 1 à 10 atomes de carbone et $R^4$ est groupement hydrocarboné divalent contenant 1 à 20 atomes de carbone, avec un composé d'organolithium (IV), et un composé diamine (V), puis par réaction avec du dioxyde de carbone et par réaction ensuite avec un donneur de protons ou un halogénure de sulfonyle représenté par la formule générale $ZSO_2R^2$ dans laquelle Z est un atome d'halogène et $R^2$ a la même signification que celle décrite précédemment.

4. Procédé selon la revendication 2 dans lequel le polymère d'éthylène (I) dans lequel X est $-OR^1$ ou un atome d'halogène dans

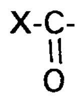

est fabriqué par polymérisation d'éthylène en présence d'un composé dilithio formé par réaction d'un composé dioléfinique (III) représenté par la formule générale, $H_2C=CR^3\text{-}R^4\text{-}CR^3=CH_2$ dans laquelle $R^3$ est groupement hydrocarboné contenant 1 à 10 atomes de carbone et $R^4$ est groupement hydrocarboné divalent contenant 1 à 20 atomes de carbone, avec un composé d'organolithium (IV), et un composé diamine (V), puis par réaction avec du dioxyde de carbone, par réaction ensuite avec un donneur de protons et puis par réaction avec un alcool représenté par $R^1OH$ dans lequel $R^1$ est un groupement hydrocarboné contenant 1 à 5 atomes de carbone ou un halogénure de thionyle.

5. Procédé selon la revendication 3 ou 4, dans lequel la réaction du composé dioléfinique (III) avec le composé d'organolithium (IV) est menée en présence d'un solvant organique.

6. Procédé selon l'une quelconque des revendications 3 à 5 dans lequel le rapport molaire du composé (IV) sur le composé (III) se situe dans l'intervalle 0,1 à 30.

7. Procédé selon l'une quelconque des revendications 3 à 6, dans lequel le composé diamine (V) est représenté par la formule générale $R^6{}_2N\text{-}R^7\text{-}NR^6{}_2$ dans laquelle $R^6$ est un groupement hydrocarboné contenant 1 à 5 atomes de carbone et $R^7$ est groupement hydrocarboné divalent contenant 1 à 10 atomes de carbone.

8. Procédé selon l'une quelconque des revendications 3 à 7, dans lequel le groupement diamine (V) est utilisé dans une proportion de 0,1 à 20 moles pour 1 mole de composé dioléfinique (III).

9. Procédé selon l'une quelconque des revendications 3 à 8, dans lequel le donneur de proton est au moins un élément choisi parmi l'eau, le méthanol, l'éthanol, le propanol, l'acide chlorhydrique, l'acide nitrique et l'acide sulfurique.

10. Procédé selon la revendication 3 ou l'une quelconque des revendications 5 à 9 subordonnée à la revendication 3, dans lequel l'halogénure de sulfonyle est représenté par la formule générale $ZSO_2R^2$ dans laquelle Z est un atome d'halogène et $R^2$ est un groupement hydrocarboné contenant 1 à 20 atomes de carbone.

11. Procédé selon l'une quelconque des revendications 4 à 9, dans lequel l'halogénure de thionyle est au moins un élément choisi parmi $SOCl_2$, $SO_2Cl_2$, $SOBr_2$, $SOI_2$, $SO_2Br_2$ et $SO_2I_2$.

12. Procédé selon l'une quelconque des revendications 2 à 11, dans lequel la polycondensation du polymère d'éthylène (I) avec le composé (II) est menée en présence d'un solvant.

**13.** Procédé selon l'une quelconque des revendications 2 à 12, dans lequel la polycondensation du polymère d'éthylène (I) avec le composé (II) est menée à une température comprise entre 50 et 250 ° C pendant une durée comprise entre 1 et 100 heures.

**14.** Procédé selon l'une quelconque des revendications 2 à 13, dans lequel la polycondensation du polymère d'éthylène (I) avec le composé (II) est menée en présence d'un catalyseur sélectionné parmi les tétraalcoxydes de titane tels que le tétrapropoxyde de titane, le tétrabutoxyde de titane et le tétrahexyloxyde de titane.

**15.** Procédé selon l'une quelconque des revendications 2 à 14, dans lequel le polymère d'éthylène (I') dans lequel X' dans -X'O est un atome d'hydrogène est fabriqué par polymérisation d'éthylène en présence d'un produit de réaction d'un catalyseur de polymérisation comprenant un composé chélate de vanadium et un halogénure de dialkylaluminium, et un composé ω,ω'-dioléfinique contenant 5 à 20 atomes de carbone, par réaction avec le composé dioléfinique, puis par réaction avec un donneur de protons et par hydroxylation du polymère d'éthylène résultant (III') ayant des groupements vinyles à ses deux extrémités.

**16.** Procédé selon l'une quelconque des revendications 2 à 15, dans lequel le polymère d'éthylène (I') dans lequel X' dans -X'O est $-SiR^{1'}_3$ ou

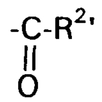

dans lequel $R^{1'}$ et $R^{2'}$ sont des groupements hydrocarbonés contenant 1 à 5 atomes de carbone est fabriqué par polymérisation d'éthylène en présence d'un produit de réaction d'un catalyseur de polymérisation comprenant un composé chélate de vanadium et un halogénure de dialkylaluminium, et un composé ω,ω'-dioléfinique contenant 5 à 20 atomes de carbone, par réaction avec le composé dioléfinique, puis par réaction avec un donneur de proton, par hydroxylation du polymère d'éthylène résultant (III') ayant des groupements vinyles à ses deux extrémités et par réaction du polymère d'éthylène hydrocylé avec un composé silane représenté par $R^{1'}_3SiY'$ dans lequel $R^{1'}$ a la même signification que celle décrite ci-dessus et Y' est atome d'halogène ou un acide carboxylique représenté par la formule générale $R^{2'}COOH$ dans lequel $R^{2'}$ a la même signification que celle décrite ci-dessus.

**17.** Procédé selon la revendication 15 ou 16, dans lequel le composé chélate de vanadium et l'halogénure de dialkylaluminium sont présents en proportion de 1 à 1000 moles d'halogénure de dialkylaluminium pour 1 mole de composé chélate de vanadium.

**18.** Procédé selon l'une quelconque des revendications 15 à 17, dans lequel le composé ω,ω'-dioléfinique est représenté par la formule générale $H_2C=CH-(-C_mH_{2m}-)-CH=CH_2$ dans lequel m vaut 1 à 15.

**19.** Procédé selon l'une quelconque des revendications 15 à 18, dans lequel la réaction du catalyseur de polymérisation et du composé dioléfinique est menée en présence d'un solvant.

**20.** Procédé selon l'une quelconque des revendications 1 à 19, dans lequel le rapport du catalyseur de polymérisation sur le compose dioléfinique est ajusté de manière que le composé de vanadium dans le catalyseur de polymérisation soit dans une proportion de 0,1 à 10 moles pour 1 mole du composé dioléfinique.

**21.** Procédé selon l'une quelconque des revendications 15 à 20, dans lequel l'hydroxylation du polymère d'éthylène (III') est menée par réaction du polymère d'éthylène (III') avec du diborane et par réaction ensuite avec un hydroxyde de métal alcalin et du peroxyde d'hydrogène.

**22.** Procédé selon l'une quelconque des revendications 15 à 21, dans lequel l'hydroxylation du polymère d'éthylène (III') est menée par réaction du polymère d'éthylène (III') avec de l'acide sulfurique et de l'eau.

**23.** Procédé selon l'une quelconque des revendications 15 à 22, dans lequel l'hydroxylation du polymère d'éthylène (III') est menée par réaction du polymère d'éthylène (III') avec de l'acétate de mercure et de l'eau et ensuite par réaction avec du borohydrure de sodium.